(19) Europäisches Patentamt
European Patent Office
Office européen des brevets

(11) **EP 4 318 340 A1**

(12) **EUROPEAN PATENT APPLICATION**

(43) Date of publication:
**07.02.2024 Bulletin 2024/06**

(21) Application number: **23186555.1**

(22) Date of filing: **19.07.2023**

(51) International Patent Classification (IPC):
*G06Q 10/00* (2023.01)     *G06Q 10/08* (2024.01)
*G06Q 10/087* (2023.01)     *G06Q 10/20* (2023.01)

(52) Cooperative Patent Classification (CPC):
**G06Q 10/00; G06Q 10/08; G06Q 10/087;
G06Q 10/20**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.08.2022 US 202217817855**

(71) Applicant: **The Boeing Company
Arlington, VA 22202 (US)**

(72) Inventors:
• **BELLEMARE-DAVIS, Alexander
CHICAGO, 60606-1596 (US)**
• **TAN, Baris
CHICAGO, 60606-1596 (US)**
• **NG, Valarie Yuen Wai
CHICAGO, 60606-1596 (US)**

(74) Representative: **Plasseraud IP
66, rue de la Chaussée d'Antin
75440 Paris Cedex 09 (FR)**

(54) **HEAVY MAINTENANCE NON-CONFORMANCE FORECASTING**

(57)     Predicting non-conformance of vehicle parts is provided. The method comprises collating historical work records related to a vehicle model, wherein each work record specifies a work task, non-conformances discovered during the work task, replacement parts required for the work task, when the work task occurred, and where the work task occurred. From the historical work records the system calculates probabilities of non-conformances according to types of work tasks, locations of the work tasks, and timing of the work tasks. Replacement part requirements are determined according to types of non-conformances, and requests are sent for replacement parts for specified service locations according to scheduled work tasks for the vehicle model at the service locations and anticipated probabilities of non-conformances related to the work tasks.

FIG. 5

**Description**

**BACKGROUND INFORMATION**

**1. Field:**

The present disclosure relates generally to a vehicle management system and in particular to the forecasting of non-conformances discovered through scheduled maintenance.

**2. Background:**

Aircraft maintenance involves performing various maintenance operations on an aircraft to ensure continued desired operation of the aircraft or aircraft component. The maintenance operations can include inspection, replacement, reworking inconsistencies in components, or other operations that maintain compliance with airworthiness directives and maintenance standards.

Aircraft maintenance is often performed on a scheduled basis. Most scientific reliability models focus on predicting unreliability in operation by estimating lifetimes between discrete events such as part failures. Such models statistically predict failure as a function of, e.g., flight hours or landings. Non-conformance is distinct from failure in that it represents a degraded condition that falls short of detectable failure, which might not occur in operation for some time to come. Non-conformance is typically discovered upon inspection, whether specifically scheduled inspection or in conjunction with maintenance on a related system.

Therefore, it would be desirable to have a method and apparatus that take into account at least some of the issues discussed above, as well as other possible issues. For example, it would be desirable to have a method and apparatus that overcome a technical problem with scheduling aircraft maintenance.

**SUMMARY**

An illustrative embodiment provides a computer-implemented method of predicting non-conformance of vehicle parts. The method comprises collating historical work records related to a vehicle model, wherein each work record specifies a work task, non-conformances discovered during the work task, replacement parts required for the work task, when the work task occurred, and where the work task occurred. From the historical work records the system calculates probabilities of non-conformances according to types of work tasks, locations of the work tasks, and timing of the work tasks. Replacement part requirements are determined according to types of non-conformances, and requests are sent for replacement parts for specified service locations according to scheduled work tasks for the vehicle model at the service locations and anticipated probabilities of non-conformances related to the work tasks.

Another illustrative embodiment provides a system for predicting non-conformance of vehicle parts. The system comprises a storage device configured to store program instructions and one or more processors operably connected to the storage device and configured to execute the program instructions to cause the system to: collate historical work records related to a vehicle model, wherein each work record specifies a work task, non-conformances discovered during the work task, replacement parts required for the work task, when the work task occurred, and where the work task occurred; calculate, from the historical work records, probabilities of non-conformances according to types of work tasks, locations of the work tasks, and timing of the work tasks; determine replacement part requirements according to types of non-conformances; and send requests for replacement parts for specified service locations according to scheduled work tasks for the vehicle model at the service locations and anticipated probabilities of non-conformances related to the work tasks.

Another illustrative embodiment provides a computer program product for predicting non-conformance of vehicle part. The computer program product comprises a computer-readable storage medium having program instructions embodied thereon to perform a method comprising: collating historical work records related to a vehicle model, wherein each work record specifies a work task, non-conformances discovered during the work task, replacement parts required for the work task, when the work task occurred, and where the work task occurred; calculating, from the historical work records, probabilities of non-conformances according to types of work tasks, locations of the work tasks, and timing of the work tasks; determining replacement part requirements according to types of non-conformances; and sending requests for replacement parts for specified service locations according to scheduled work tasks for the vehicle model at the service locations and anticipated probabilities of non-conformances related to the work tasks.

The features and functions can be achieved independently in various embodiments of the present disclosure or may be combined in yet other embodiments in which further details can be seen with reference to the following description and drawings.

**BRIEF DESCRIPTION OF THE DRAWINGS**

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:

Figure 1 is a pictorial representation of a network of data processing systems in which illustrative embodiments can be implemented;

Figure 2 depicts an illustration of a block diagram of a non-conformance forecasting system in accordance with an illustrative embodiment;

Figure 3 depicts a diagram illustrating replacement part prediction in accordance with the prior art;

Figure 4 depicts a diagram illustrating non-conformance-based forecasting in according with an illustrative embodiment;

Figure 5 depicts a flowchart illustrating a process for predicting non-conformance of vehicle parts in accordance with an illustrative embodiment;

Figure 6 depicts a flowchart illustrating a process for displaying probabilities of non-conformances in accordance with an illustrative embodiment;

Figure 7 depicts a flowchart illustrating a process for displaying required replacement parts in accordance with an illustrative embodiment;

Figure 8 depicts a flowchart illustrating a process for displaying probable replacement parts in accordance with an illustrative embodiment;

Figure 9 depicts a flowchart illustrating a process for displaying part replacement frequency in accordance with an illustrative embodiment;

Figure 10 depicts a flowchart illustrating a process for displaying need replacement part inventory in accordance with an illustrative embodiment;

Figure 11 is an illustration of a block diagram of a data processing system in accordance with an illustrative embodiment;

Figure 12 is an illustration of an aircraft manufacturing and service method in accordance with an illustrative embodiment;

Figure 13 is an illustration of a block diagram of an aircraft in which an illustrative embodiment may be implemented;

Figure 14 is an illustration of a block diagram of a product management system is depicted in accordance with an illustrative embodiment; and

Figure 15 depicts a decision tree diagram illustrating how the method of predicting non-conformances may be applied to a standard depot induction in accordance with an illustrative embodiment.

**DETAILED DESCRIPTION**

The illustrative embodiments recognize and take into account one or more different considerations as described herein. For example, the illustrative embodiments recognize and take into account that non-conformance is not a well-defined or discrete state of failure. Non-conformance is a degraded, but not overt, deviation in condition or performance which is typically discovered upon inspection during depot-level maintenance.

The illustrative embodiments recognize and take into account that non-conformances are typically discovered upon inspection such as, e.g., depot-level inspections and other maintenance procedures.

The illustrative embodiments recognize and take into account that because depot heavy maintenance occurs at long intervals (e.g., 5-6 years), non-conformances will occur with both extremely reliable components (which tend to have very little data on which to estimate lifetimes) and rotatable components (which tend to have a high quantity-per-aircraft or other vehicles).

The illustrative embodiments recognize and take into account that it is possible to query databases regarding historical part orders in depot and even which part orders relate to non-conformances. However, without the context of precise location, subsystem, or activity in which the non-conformance was discovered, the volume of parts ordered is indivisible by purpose and quantity and is therefore intractable for any useful forecast of non-conformances.

The illustrative embodiments recognize and take into account that because a single depot level heavy maintenance visit may last for weeks or months, it would be valuable to know when and where in the course of maintenance demands for parts are likely to arise and in what quantity for that context. Such context is necessary to determine when the risk of surprise replacement part requirements have passed. Otherwise, it would be necessary to hold the entire possible demand in reserve at significant cost until the entire maintenance process has finished.

The illustrative embodiments recognize and take into account that supply chains are optimized to support scheduled replacement of parts but not replacement due to unreliability, i.e., non-conformance. Unlike general failures, non-conformances are detected upon inspection. As a result, inspections tend to produce high densities of unanticipated parts demands, which can cause stock-outs delays, backlogs, and reduced fleet availability.

The illustrative embodiments provide a method for relating replacement parts orders to non-conformances and the specific work tasks during which the non-conformances were discovered. The illustrative embodiments employ statistical modeling to forecast the probability and quantity of non-conformances likely to occur in any given stage and location of a maintenance induction, as well as the probability and quantity of specific replacement parts required to resolve the non-conformances.

As used herein, the phrase "at least one of," when used with a list of items, means different combinations of one or more of the listed items can be used, and only one of each item in the list may be needed. In other words, "at least one of" means any combination of items and number of items may be used from the list, but not all of the items in the list are required. The item can be a particular object, a thing, or a category.

For example, without limitation, "at least one of item A, item B, or item C" may include item A, item A and item B, or item B. This example also may include item A, item B, and item C or item B and item C. Of course, any combinations of these items can be present. In some illustrative examples, "at least one of" can be, for example, without limitation, two of item A; one of item B; and ten of item C; four of item B and seven of item C; or other suitable combinations.

As used herein, "a number of" when used with reference to items, means one or more items. For example, "a number of different types of networks" is one or more different types of networks. In illustrative example, a "set of" as used with reference items means one or more items. For example, a set of metrics is one or more of the metrics.

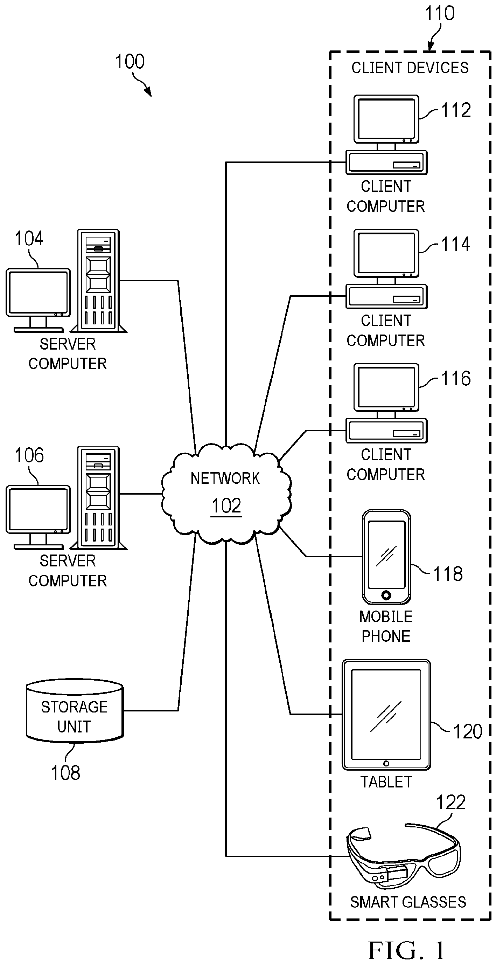

With reference to **Figure 1,** a pictorial representation of a network of data processing systems is depicted in which illustrative embodiments may be implemented. Network data processing system **100** is a network of computers in which the illustrative embodiments may be implemented. Network data processing system **100** contains network **102,** which is the medium used to provide communications links between various devices and computers connected together within network data processing system **100**. Network **102** might include connections, such as wire, wireless communication links, or fiber optic cables.

In the depicted example, server computer **104** and server computer **106** connect to network **102** along with storage unit **108**. In addition, client devices **110** connect to network **102**. In the depicted example, server computer **104** provides information, such as boot files, operating system images, and applications to client devices **110.** Client devices **110** can be, for example, computers, workstations, or network computers. As depicted, client devices **110** include client computers **112, 114,** and **116**. Client devices **110** can also include other types of client devices such as mobile phone **118,** tablet computer **120,** and smart glasses **122.**

In this illustrative example, server computer **104,** server computer **106,** storage unit **108,** and client devices **110** are network devices that connect to network **102** in which network **102** is the communications media for these network devices. Some or all of client devices **110** may form an Internet of things (IoT) in which these physical devices can connect to network **102** and exchange information with each other over network **102.**

Client devices **110** are clients to server computer **104** in this example. Network data processing system **100** may include additional server computers, client computers, and other devices not shown. Client devices **110** connect to network **102** utilizing at least one of wired, optical fiber, or wireless connections.

Program code located in network data processing system **100** can be stored on a computer-recordable storage medium and downloaded to a data processing system or other device for use. For example, the program code can be stored on a computer-recordable storage medium on server computer **104** and downloaded to client devices **110** over network **102** for use on client devices **110.**

In the depicted example, network data processing system **100** is the Internet with network **102** representing a worldwide collection of networks and gateways that use the Transmission Control Protocol/Internet Protocol (TCP/IP) suite of protocols to communicate with one another. At the heart of the Internet is a backbone of high-speed data communication lines between major nodes or host computers consisting of thousands of commercial, governmental, educational, and other computer systems that route data and messages. Of course, network data processing system **100** also may be implemented using a number of different types of networks. For example, network **102** can be comprised of at least one of the Internet, an intranet, a local area network (LAN), a metropolitan area network (MAN), or a wide area network (WAN). **Figure 1** is intended as an example, and not as an architectural limitation for the different illustrative embodiments.

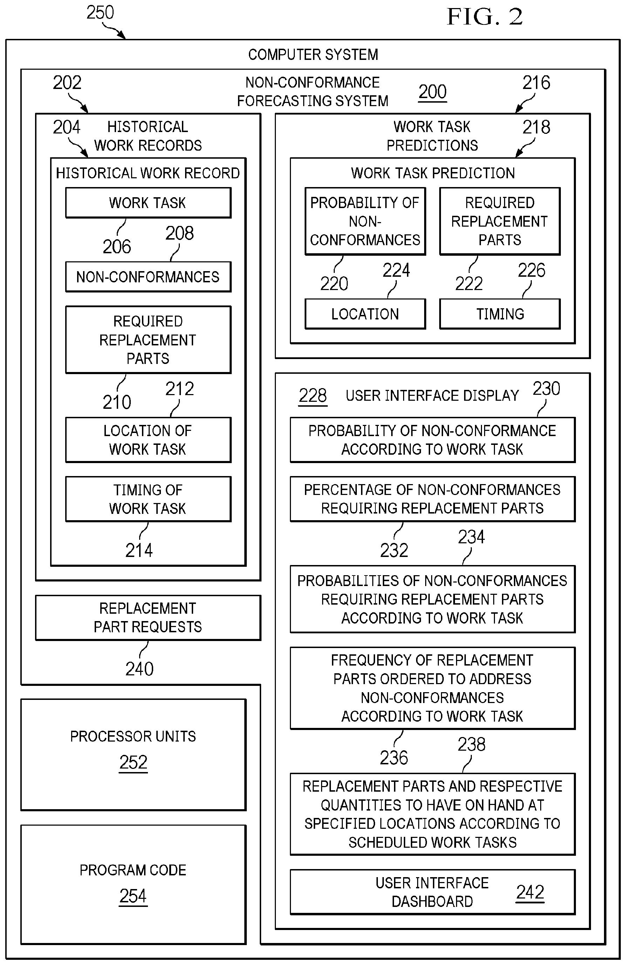

With reference now to **Figure 2,** an illustration a block diagram of a non-conformance forecasting system is depicted in accordance with an illustrative embodiment. In this illustrative example, non-conformance forecasting system **200** includes components that can be implemented in hardware such as the hardware shown in network data processing system **100** in **Figure 1.**

Non-conformance forecasting system **200** collates a number of historical work records **202** related to a specific vehicle model. The vehicle model may be for any type of vehicle such as an aircraft, automobile, boat, ship, etc. Each historical work record **204** comprises the type of work task **206** performed on the vehicle, any non-conformances **208** discovered during the work task **206,** any required replacement parts **210** needed to resolve the non-conformances **208,** the location **212** of the work task **206** (i.e., at what service location the work was performed), and the timing **214** of the work task **206** (e.g., 5-year servicing, 50,000-mile servicing, etc., depending on vehicle type).

Based on the historical work records **202**, non-conformance forecasting system **200** makes a number of work task predictions **216**. Each work task prediction **218** calculates a probability of discovering non-conformances **220** in the course of performing the work task and the required replacement parts **222** likely needed to resolve those non-conformances. The work task prediction **218** may be based on location **224** where the work task is performed and the timing **226** of the work task.

Non-conformance forecasting system **200** may display a number of correlations related to non-conformance predictions in a user interface display **228**. Non-conformance forecasting system **200** may display the probability of a non-conformance according to the type of work task **230**. Non-conformance forecasting system **200** may display the percentage of non-conformances requiring replacement parts **232**. Non-conformance forecasting system **200** may display probabilities of non-conformances requiring replacement parts according to the type of work task **234**. Non-conformance forecasting system **200** may display the frequency of replacement parts ordered to resolve non-conformances according to the type of work task **236**. Non-conformance forecasting system **200** may also display replacement parts and respective quantities to have on hand at specified locations according to scheduled work tasks **238**.

User interface display **228** provides an interactive visual tool such as user interface dashboard **242** that enable the user to navigate the probabilities and quantities of non-conformances and replacement parts for any upcoming induction. User interface display **228** also allows the user to update forecasts of risk for inductions already in progress (e.g., modeling where risks have passed or have yet to be seen) . Users may also user interface display **228** to examine where high-risk (i.e., out of stock) replacement parts are likely to be needed and in what quantity, permitting the supply chain to better anticipate non-conformance-driven parts demand and mitigate risk of being out of stock.

User interface display **228** is a physical hardware system and includes one or more display devices on which a user interface such as user interface dashboard **242** can be displayed. User interface dashboard **242** may be a graphical user interface.

The display devices in user interface display **228** can include at least one of a light emitting diode (LED) display, a liquid crystal display (LCD), an organic light emitting diode (OLED) display, a computer monitor, a projector, a flat panel display, a heads-up display (HUD), a head-mounted display (HMD), or some other suitable device that can output information for the visual presentation of information.

Based on the correlations related to non-conformances, non-conformance forecasting system **200** can send replacement part requests **240** for specific locations according to scheduled work tasks at those locations.

Non-conformance forecasting system **200** provides a "living document" process using live, real-time data and can serves as a platform on which to test different forecasting models. For example, non-conformance forecasting system **200** can be used to test how far back in time historical parts data remains relevant. Non-conformance forecasting system **200** can also provide data and performance monitoring features such as showing which datasets (e.g., inductions in progress) are included or excluded to enable users to monitor the quality and trustworthiness of the predictions being produced.

Non-conformance forecasting system **200** can be implemented in software, hardware, firmware, or a combination thereof. When software is used, the operations performed by non-conformance forecasting system **200** can be implemented in program code configured to run on hardware, such as a processor unit. When firmware is used, the operations performed by non-conformance forecasting system **200** can be implemented in program code and data and stored in persistent memory to run on a processor unit. When hardware is employed, the hardware can include circuits that operate to perform the operations in non-conformance forecasting system **200.**

In the illustrative examples, the hardware can take a form selected from at least one of a circuit system, an integrated circuit, an application specific integrated circuit (ASIC), a programmable logic device, or some other suitable type of hardware configured to perform a number of operations. With a programmable logic device, the device can be configured to perform the number of operations. The device can be reconfigured at a later time or can be permanently configured to perform the number of operations. Programmable logic devices include, for example, a programmable logic array, a programmable array logic, a field programmable logic array, a field programmable gate array, and other suitable hardware devices. Additionally, the processes can be implemented in organic components integrated with inorganic components and can be comprised entirely of organic components excluding a human being. For example, the processes can be implemented as circuits in organic semiconductors.

Computer system **250** is a physical hardware system and includes one or more data processing systems. When more than one data processing system is present in computer system **250,** those data processing systems are in communication with each other using a communications medium. The communications medium can be a network. The data processing systems can be selected from at least one of a computer, a server computer, a tablet computer, or some other suitable data processing system.

As depicted, computer system **250** includes a number of processor units **252** that are capable of executing program code **254** implementing processes in the illustrative examples. As used herein a processor unit in the number of processor units **252** is a hardware device and is comprised of hardware circuits such as those on an integrated circuit that respond and process instructions and program code that operate a computer. When a number of processor units **252** execute program code **254** for a process, the number of processor units **252** is one or more processor units that can be on the same computer or on different computers. In other words, the process can be distributed between processor units on the same or different computers in a computer system. Further, the number of processor units **252** can be of the same type or different type of processor units. For example, a number of processor units can be selected from at least one of a single core processor, a dual-core processor, a multi-processor core, a general-purpose central processing unit (CPU), a graphics processing unit (GPU), a digital signal processor (DSP), or some other type of processor unit.

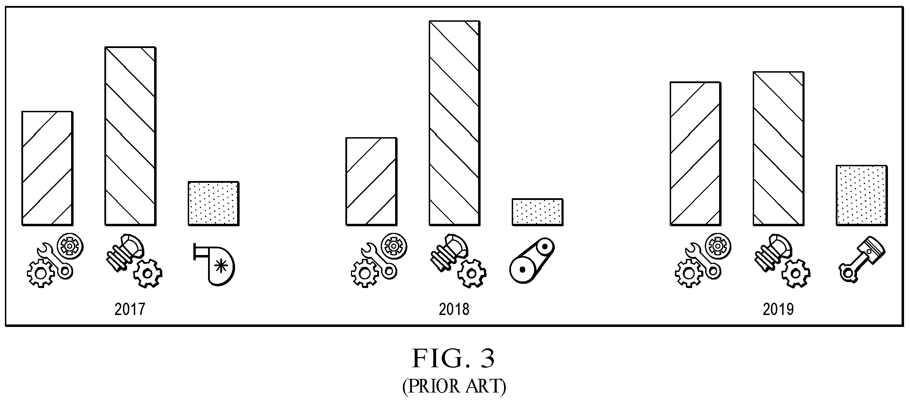

**Figure 3** depicts a diagram illustrating replacement part prediction in accordance with the prior art. As shown in the present example, previous demand modeling focused on predicting the total quantities of individual parts from bulk historical records. Such demand modeling is best suited for modeling physical failures that occur on a continuous basis as a function of operational usage.

Modeling total demand for individual parts is good for recommending scheduled replacements but not for modeling inspections. Such an approach might work for minor hardware but does not provide insight regarding why, where, or when the replacement parts will be needed.

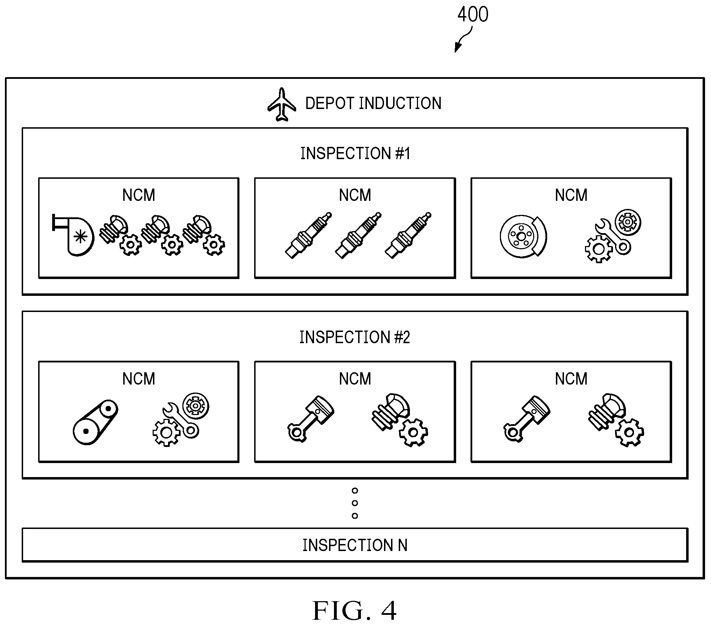

**Figure 4** depicts a diagram illustrating non-conformance-based forecasting in according with an illustrative embodiment. Non-conformance-based forecasting **400** may be implemented in non-conformance forecasting system **200.**

Non-conformance-based forecasting **400** focuses on non-conformance records, parts orders that result from the non-conformances, and the specific activity (work task) during which the non-conformances are discovered. This approach ties the demand for replacement parts to its root cause. Non-conformance-based forecasting **400** recognizes that parts tend to be ordered in groups according to specific work tasks. Therefore, in addition to a main part being replaced, there are often associated parts such as bearings and bushings that are replaced as well. By focusing on depot induction tasks (work cards) rather than modeling individual part life, the illustrative embodiments turn otherwise unexpected unreliability into scheduled events. This approach informs the user as what is likely to be found non-conformant, where and when it is likely to be found, and what replacement parts are likely to resolve the non-conformance.

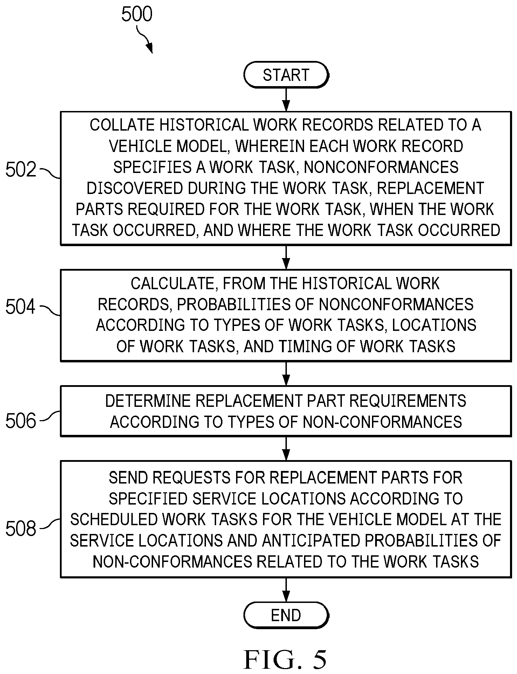

Turning next to **Figure 5,** an illustration of a flowchart of a process for predicting non-conformance of vehicle parts is depicted in accordance with an illustrative embodiment. The process in **Figure 5** can be implemented in hardware, software, or both. When implemented in software, the process can take the form of program code that is run by one of more processor units located in one or more hardware devices in one or more computer systems. For example, the process can be implemented in non-conformance forecasting system **200** in computer system **250** in **Figure 2.**

Process **500** beings by collating historical work records related to a vehicle model, wherein each work record specifies: a work task, non-conformances discovered during the work task, replacement parts required for the work task, when the work task occurred, and where the work task occurred (operation **502**).

The system calculates, from the historical work records, probabilities of non-conformances according to types of work tasks, locations of work tasks, and timing of work tasks (operation **504**).

The system then determines replacement part requirements according to the types of non-conformances (operation **506**).

The system sends requests for replacement parts for specified service locations according to scheduled work tasks for the vehicle model at the service locations and anticipated probabilities of non-conformances related to the work tasks (operation **508**). Process **500** then ends.

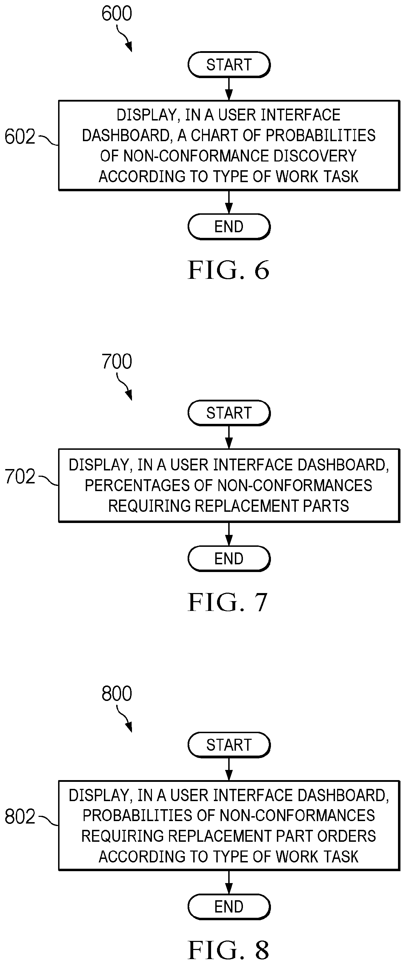

**Figure 6** depicts a flowchart illustrating a process for displaying probabilities of non-conformances in accordance with an illustrative embodiment. Process **600** may occur after operation **506** in process **500** in **Figure 5.**

Process **600** comprises displaying, in a user interface dashboard, a chart of probabilities of non-conformance discovery according to type of work task (operation **602**). Process **600** then ends.

**Figure 7** depicts a flowchart illustrating a process for displaying required replacement parts in accordance with an illustrative embodiment. Process **700** may occur after operation **506** in process **500** in **Figure 5.**

Process **700** comprises displaying, in a user interface dashboard, percentages of non-conformances requiring replacement parts (operation **702**). Process **700** then ends.

**Figure 8** depicts a flowchart illustrating a process for displaying probable replacement parts in accordance with an illustrative embodiment. Process **800** may occur after operation **506** in process **500** in **Figure 5.**

Process **800** comprises displaying, in a user interface dashboard, probabilities of non-conformances requiring in replacement part orders according to type of work task (operation **802**). Process **800** then ends.

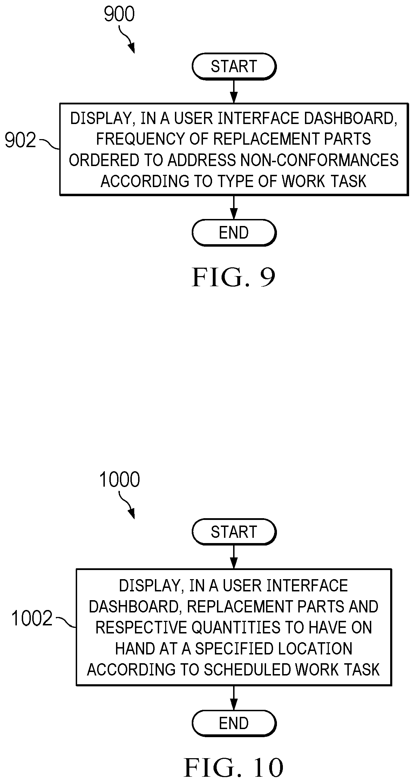

**Figure 9** depicts a flowchart illustrating a process for displaying part replacement frequency in accordance with an illustrative embodiment. Process **900** may occur after operation **506** in process **500** in **Figure 5.**

Process **900** comprises displaying, in a user interface dashboard, frequency of replacement parts ordered to resolve non-conformances according to type of work task (operation **902**). Process **900** then ends.

**Figure 10** depicts a flowchart illustrating a process for displaying need replacement part inventory in accordance with an illustrative embodiment. Process **1000** may occur after operation **506** in process **500** in **Figure 5.**

Process **1000** comprises displaying, in a user interface dashboard, replacement parts and respective quantities to have on hand at a specified location according to scheduled work tasks (operation **1002).** Process **1000** then ends.

The flowcharts and block diagrams in the different depicted embodiments illustrate the architecture, functionality, and operation of some possible implementations of apparatuses and methods in an illustrative embodiment. In this regard, each block in the flowcharts or block diagrams can represent at least one of a module, a segment, a function, or a portion of an operation or step. For example, one or more of the blocks can be implemented as program code, hardware, or a combination of the program code and hardware. When implemented in hardware, the hardware can, for example, take the form of integrated circuits that are manufactured or configured to perform one or more operations in the flowcharts or block diagrams. When implemented as a combination of program code and hardware, the implementation may take the form of firmware. Each block in the flowcharts or the block diagrams can be implemented using special purpose hardware systems that perform the different operations or combinations of special purpose hardware and program code run by the special purpose hardware.

In some alternative implementations of an illustrative embodiment, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

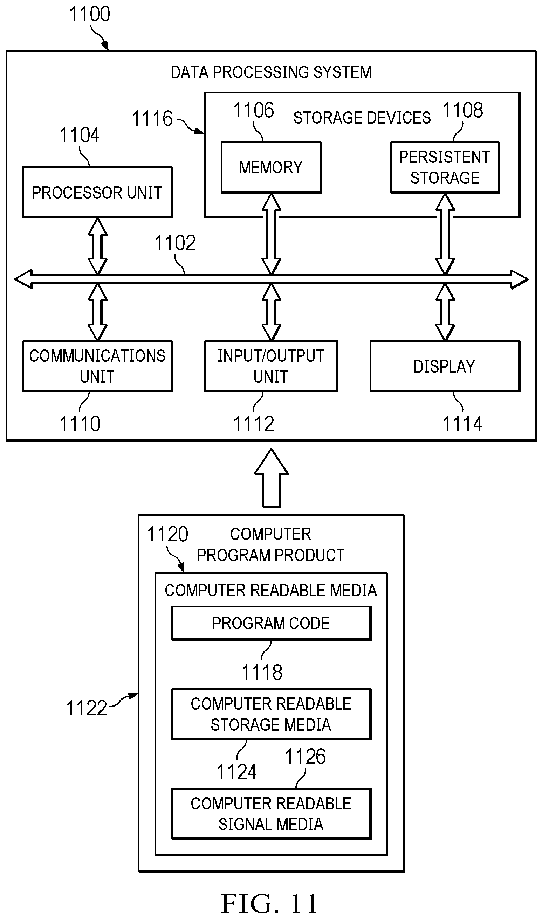

Turning now to **Figure 11,** an illustration of a block diagram of a data processing system is depicted in accordance with an illustrative embodiment. Data processing system **1100** may be used to implement server computers **104** and **106** and client devices **110** in **Figure 1,** as well as computer system **250** in **Figure 2.** In this illustrative example, data processing system **1100** includes communications framework **1102,** which provides communications between processor unit **1104,** memory **1106,** persistent storage **1108,** communications unit **1110,** input/output (I/O) unit **1112,** and display **1114.** In this example, communications framework **1102** takes the form of a bus system.

Processor unit **1104** serves to execute instructions for software that may be loaded into memory **1106.** Processor unit **1104** may be a number of processors, a multi-processor core, or some other type of processor, depending on the particular implementation. In an embodiment, processor unit **1104** comprises one or more conventional general-purpose central processing units (CPUs). In an alternate embodiment, processor unit **1104** comprises one or more graphical processing units (GPUs) .

Memory **1106** and persistent storage **1108** are examples of storage devices **1116.** A storage device is any piece of hardware that is capable of storing information, such as, for example, without limitation, at least one of data, program code in functional form, or other suitable information either on a temporary basis, a permanent basis, or both on a temporary basis and a permanent basis. Storage devices **1116** may also be referred to as computer-readable storage devices in these illustrative examples. Memory **1106,** in these examples, may be, for example, a random access memory or any other suitable volatile or non-volatile storage device. Persistent storage **1108** may take various forms, depending on the particular implementation.

For example, persistent storage **1108** may contain one or more components or devices. For example, persistent storage **1108** may be a hard drive, a flash memory, a rewritable optical disk, a rewritable magnetic tape, or some combination of the above. The media used by persistent storage **1108** also may be removable. For example, a removable hard drive may be used for persistent storage **1108.** Communications unit **1110,** in these illustrative examples, provides for communications with other data processing systems or devices. In these illustrative examples, communications unit **1110** is a network interface card.

Input/output unit **1112** allows for input and output of data with other devices that may be connected to data processing system **1100.** For example, input/output unit **1112** may provide a connection for user input through at least one of a keyboard, a mouse, or some other suitable input device. Further, input/output unit **1112** may send output to a printer. Display **1114** provides a mechanism to display information to a user.

Instructions for at least one of the operating system, applications, or programs may be located in storage devices **1116,** which are in communication with processor unit **1104** through communications framework **1102.** The processes of the different embodiments may be performed by processor unit **1104** using computer-implemented instructions, which may be located in a memory, such as memory **1106.**

These instructions are referred to as program code, computer-usable program code, or computer-readable program code that may be read and executed by a processor in processor unit **1104.** The program code in the different embodiments may be embodied on different physical or computer-readable storage media, such as memory **1106** or persistent storage **1108.**

Program code **1118** is located in a functional form on computer-readable media **1120** that is selectively removable and may be loaded onto or transferred to data processing system **1100** for execution by processor unit **1104.** Program code **1118** and computer-readable media **1120** form computer program product **1122** in these illustrative examples. In one example, computer-readable media **1120** may be computer-readable storage media **1124** or computer-readable signal media **1126**.

In these illustrative examples, computer-readable storage media **1124** is a physical or tangible storage device used to store program code **1118** rather than a medium that propagates or transmits program code **1118**. Computer readable storage media **1124,** as used herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire, as used herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire.

Alternatively, program code **1118** may be transferred to data processing system **1100** using computer-readable signal media **1126**. Computer-readable signal media **1126** may be, for example, a propagated data signal containing program code **1118**. For example, computer-readable signal media **1126** may be at least one of an electromagnetic signal, an optical signal, or any other suitable type of signal. These signals may be transmitted over at least one of communications links, such as wireless communications links, optical fiber cable, coaxial cable, a wire, or any other suitable type of communications link.

The different components illustrated for data processing system **1100** are not meant to provide architectural limitations to the manner in which different embodiments may be implemented. The different illustrative embodiments may be implemented in a data processing system including components in addition to or in place of those illustrated for data processing system **1100**. Other components shown in **Figure 11** can be varied from the illustrative examples shown. The different embodiments may be implemented using any hardware device or system capable of running program code **1118**.

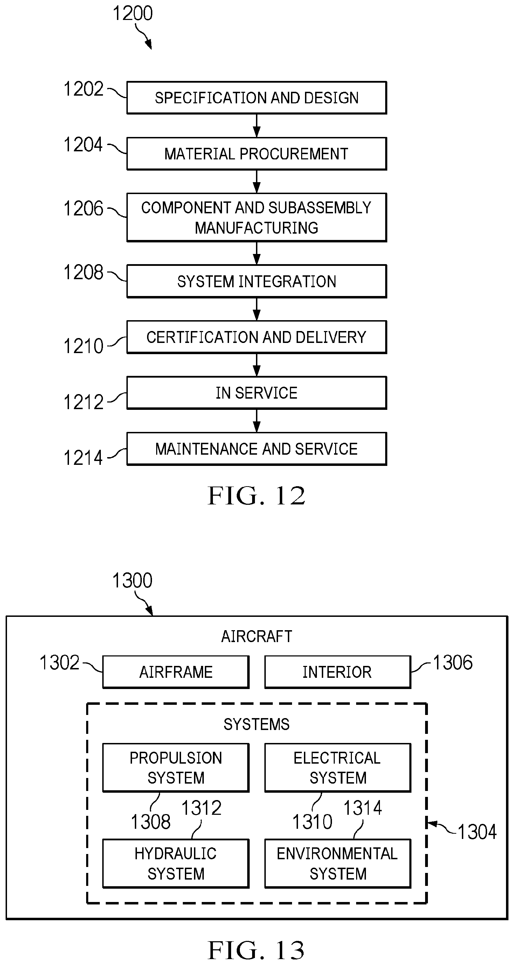

Illustrative embodiments of the disclosure may be described in the context of aircraft manufacturing and service method **1200** as shown in **Figure 12** and aircraft **1300** as shown in **Figure 13**. Turning first to **Figure 12,** an illustration of an aircraft manufacturing and service method is depicted in accordance with an illustrative embodiment. During pre-production, aircraft manufacturing and service method **1200** may include specification and design **1202** of aircraft **1300** in **Figure 13** and material procurement **1204**.

During production, component and subassembly manufacturing **1206** and system integration **1208** of aircraft **1300** in **Figure 13** takes place. Thereafter, aircraft **1300** in **Figure 13** can go through certification and delivery **1210** in order to be placed in service **1212**. While in service **1212** by a customer, aircraft **1300** in **Figure 13** is scheduled for routine maintenance and service **1214,** which may include modification, reconfiguration, refurbishment, and other maintenance or service.

Each of the processes of aircraft manufacturing and service method **1200** may be performed or carried out by a system integrator, a third party, an operator, or some combination thereof. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 13,** an illustration of an aircraft is depicted in which an illustrative embodiment may be implemented. In this example, aircraft **1300** is produced by aircraft manufacturing and service method **1200** in **Figure 12** and may include airframe **1302** with plurality of systems **1304** and interior **1306**. Examples of systems **1304** include one or more of propulsion system **1308,** electrical system **1310,** hydraulic system **1312,** and environmental system **1314**. Any number of other systems may be included. Although an aerospace example is shown, different illustrative embodiments may be applied to other industries, such as the automotive industry.

Apparatuses and methods embodied herein may be employed during at least one of the stages of aircraft manufacturing and service method **1200** in **Figure 12.**

In one illustrative example, components or subassemblies produced in component and subassembly manufacturing **1206** in **Figure 12** can be fabricated or manufactured in a manner similar to components or subassemblies produced while aircraft **1300** is in service **1212** in **Figure 12**. As yet another example, one or more apparatus embodiments, method embodiments, or a combination thereof can be utilized during production stages, such as component and subassembly manufacturing **1206** and system integration **1208** in **Figure 12**. One or more apparatus embodiments, method embodiments, or a combination thereof may be utilized while aircraft **1300** is in service **1212,** during maintenance and service **1214** in **Figure 12,** or both. The use of a number of the different illustrative embodiments may substantially expedite the assembly of aircraft **1300,** reduce the cost of aircraft **1300,** or both expedite the assembly of aircraft **1300** and reduce the cost of aircraft **1300.**

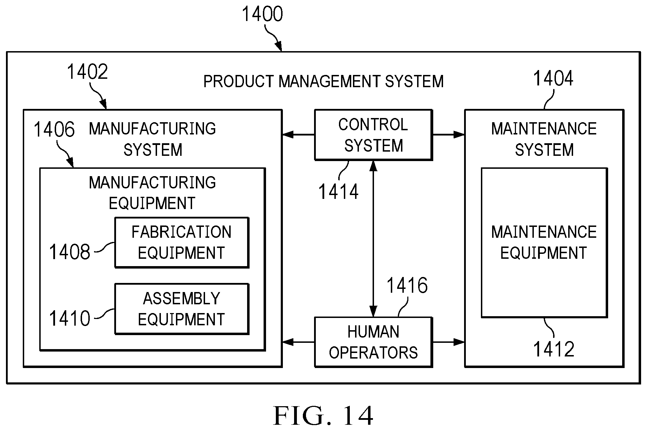

Turning now to **Figure 14,** an illustration of a block diagram of a product management system is depicted in accordance with an illustrative embodiment. Product management system **1400** is a physical hardware system. In this illustrative example, product management system **1400** includes at least one of manufacturing system **1402** or maintenance system **1404.**

Manufacturing system **1402** is configured to manufacture products, such as aircraft **1300** in **Figure 13.** As depicted, manufacturing system **1402** includes manufacturing equipment **1406.** Manufacturing equipment **1406** includes at least one of fabrication equipment **1408** or assembly equipment **1410.**

Fabrication equipment **1408** is equipment that used to fabricate components for parts used to form aircraft **1300** in **Figure 13.** For example, fabrication equipment **1408** can include machines and tools. These machines and tools can be at least one of a drill, a hydraulic press, a furnace, an autoclave, a mold, a composite tape laying machine, an automated fibre placement (AFP) machine, a vacuum system, a robotic pick and place system, a flatbed cutting machine, a laser cutter, a computer numerical control (CNC) cutting machine, a lathe, or other suitable types of equipment. Fabrication equipment **1408** can be used to fabricate at least one of metal parts, composite parts, semiconductors, circuits, fasteners, ribs, skin panels, spars, antennas, or other suitable types of parts.

Assembly equipment **1410** is equipment used to assemble parts to form aircraft **1300** in **Figure 13.** In particular, assembly equipment **1410** is used to assemble components and parts to form aircraft **1300** in **Figure 13.** Assembly equipment **1410** also can include machines and tools. These machines and tools may be at least one of a robotic arm, a crawler, a faster installation system, a rail-based drilling system, or a robot. Assembly equipment **1410** can be used to assemble parts such as seats, horizontal stabilizers, wings, engines, engine housings, landing gear systems, and other parts for aircraft **1300** in **Figure 13.**

In this illustrative example, maintenance system **1404** includes maintenance equipment **1412.** Maintenance equipment **1412** can include any equipment needed to perform maintenance on aircraft **1300** in **Figure 13.** Maintenance equipment **1412** may include tools for performing different operations on parts on aircraft **1300** in **Figure 13.** These operations can include at least one of disassembling parts, refurbishing parts, inspecting parts, reworking parts, manufacturing replacement parts, or other operations for performing maintenance on aircraft **1300** in **Figure 13.** These operations can be for routine maintenance, inspections, upgrades, refurbishment, or other types of maintenance operations.

In the illustrative example, maintenance equipment **1412** may include ultrasonic inspection devices, x-ray imaging systems, vision systems, drills, crawlers, and other suitable devices. In some cases, maintenance equipment **1412** can include fabrication equipment **1408,** assembly equipment **1410,** or both to produce and assemble parts that needed for maintenance.

Product management system **1400** also includes control system **1414.** Control system **1414** is a hardware system and may also include software or other types of components. Control system **1414** is configured to control the operation of at least one of manufacturing system **1402** or maintenance system **1404.** In particular, control system **1414** can control the operation of at least one of fabrication equipment **1408,** assembly equipment **1410,** or maintenance equipment **1412.**

The hardware in control system **1414** can be implemented using hardware that may include computers, circuits, networks, and other types of equipment. The control may take the form of direct control of manufacturing equipment **1406.** For example, robots, computer-controlled machines, and other equipment can be controlled by control system **1414.** In other illustrative examples, control system **1414** can manage operations performed by human operators **1416** in manufacturing or performing maintenance on aircraft **1300.** For example, control system **1414** can assign tasks, provide instructions, display models, or perform other operations to manage operations performed by human operators **1416.** In these illustrative examples, control system **1414** to manage at least one of the manufacturing or maintenance of aircraft **1300** in **Figure 13** to employ a fuel tank protection system within fuel tanks for aircraft **1300.** The fuel protection system can be implemented in fuel tanks during manufacturing fuel tanks for adding fuel tanks during maintenance to aircraft **1300.**

In the different illustrative examples, human operators **1416** can operate or interact with at least one of manufacturing equipment **1406,** maintenance equipment **1412,** or control system **1414.** This interaction can occur to manufacture aircraft **1300** in **Figure 13.**

Of course, product management system **1400** may be configured to manage other products other than aircraft **1300** in **Figure 13.** Although product management system **1400** has been described with respect to manufacturing in the aerospace industry, product management system **1400** can be configured to manage products for other industries. For example, product management system **1400** can be configured to manufacture products for the automotive industry as well as any other suitable industries.

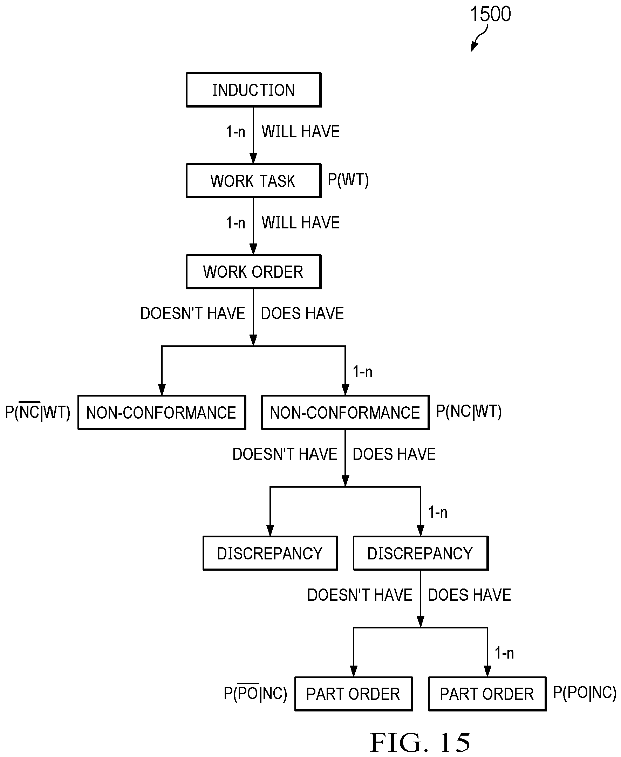

**Figure 15** depicts a decision tree diagram illustrating how the method of predicting non-conformances shown in **Figures 5-11** may be applied to a standard depot induction in accordance with an illustrative embodiment.

Tree diagram **1500** represents the hierarchical relationships between variables during the induction process. Tree diagram **1500** illustrates the relationship between consecutive levels in the process. 1-n indicates a one-to-many relationship. For example, for a given induction, there may be multiple work tasks, and for a given work task, there may be multiple work orders.

An induction refers to an umbrella record for heavy maintenance depot visit for a vehicle such as an aircraft. Each visit is uniquely identified. Each induction comprises one or more work tasks, which are scheduled tasks, each comprising one or more work orders **1506.** A work order comprises activities undertaken at the time of discovery or corrective maintenance addressing a non-conformance.

Given a work task, the predictive method of the illustrative embodiments can calculate the probability of finding non-conformances. Non-conformance describes a part not conforming to standards discovered during planned maintenance. A discrepancy describes the non-conformance in more detail. Provides a discrepant text to describe the non-conformance. A part can be non-conformant in multiple ways, so a non-conformance can create multiple discrepancies.

Bayes' theorem can be used for the given conditional probability. In probability theory and statistics, Bayes' theorem describes the probability of an event, based on prior knowledge of conditions that might be related to the event. One application of Bayes' theorem is Bayesian inference, an approach to statistical inference. With Bayesian probability interpretation, the theorem expresses how a degree of belief, expressed as a probability, should rationally change to account for the availability of related evidence.

Bayes' theorem is stated by the equation:

$$P(A|B) = \frac{P(B|A)P(A)}{P(B)}$$

where $A$ and $B$ represent events, and P(B) ≠ 0. $P(A|B)$ is the probability of event $A$ occurring given that $B$ is true. $P(B|A)$ is the probability of event $B$ occurring given $A$ is true. P(i4) and $P(B)$ are the respective probabilities of observing $A$ and B.

$P(W_T)$ is the probability of an induction having a given work task and can be expressed:

$$P(W_T) = \frac{Historical\ count\ of\ given\ work\ task\ in\ an\ induction}{Historical\ count\ of\ inductions}$$

$P(N_C)$ is the probability of an induction having a non-conformance and can be expressed:

$$P(N_C) = \frac{Historical\ count\ of\ induction\ work\ tasks\ that\ resulted\ in\ an\ NCR}{Historical\ count\ of\ inductions}$$

Therefore, given work task, non-conformance forecasting system **200** calculates the probability of discovering a non-conformance or the absence of a non-conformance **1508.** The probability of having a non-conformance for the given work task can be expressed:

$$P(N_C|W_T) = P(N_C) * P(W_T|N_C)/P(W_T)$$
$$= P(N_C) * 1/P(W_T)$$
$$= P(N_C)/P(W_T)$$

It should be noted that $P(W_T|N_C)$ is equal to 1 since a non-conformance is always associated to a work task.

Given a work task with non-conformance, non-conformance forecasting system **200** calculates the probability that the work task in question requires a replacement part.

$P(P_O)$ is the probability of the given work task requiring a part order and can be expressed:

$$P(P_O) = \frac{Historical\ count\ of\ inductions\ of\ given\ work\ task\ resulting\ in\ a\ part\ order}{Historical\ count\ of\ inductions\ with\ given\ work\ task}$$

Therefore, the probability of having the given work task with a non-conformance requiring a part order can be expressed:

$$P(P_O|N_C) = P(P_O) * P(N_C|P_O)/P(N_C)$$
$$= P(P_O) * 1/P(N_C)$$
$$= P(P_O)/P(N_C)$$

Non-conformance forecasting system **200** can also calculate the probability that a given part is required in a given work task with a part order.

$P(P_{Given})$ is the probability of the given work task resulting in a given part order and can be expressed:

$$P(P_{Given}) = \frac{Historical\ count\ of\ inductions\ of\ given\ work\ task\ resulting\ in\ given\ part\ order}{Historical\ count\ of\ inductions\ with\ given\ work\ task}$$

Therefore, the probability that a given part is required in a given work task with a part order can be expressed:

$$P(P_{Given}|P_O) = P(P_{Given}) * P(P_O|P_{Given})/P(P_O)$$
$$= P(P_{Given}) * 1/P(P_O)$$
$$= P(P_{Given})/P(P_O)$$

Non-conformance forecasting system **200** can calculate the probability that a given part is required in a given induction.

$P(P_I)$ is the probability of a given induction resulting in a given part order. Since inductions are schedules with no exception, the probability is 1.

Therefore, the probability that a given part is required in a given induction can be expressed:

$$P(P_{Given}|P_I) = P(P_{Given}) * P(P_I|P_{Given})/P(P_I)$$
$$= P(P_{Given}) * 1/P(P_I)$$
$$= P(P_{Given})$$

Non-conformance forecasting system **200** can calculate the probability that a given work task with a part order produces a need for more than a given quantity.

$P(P_O > Q_R)$ is the probability of having a work task resulting in a part order with a quantity of parts requested greater than $Q_R$ and can be expressed:

$$P(P_O > Q_R) = \frac{Historical\ count\ of\ inductions\ of\ given\ work\ task\ resulting\ in\ given\ part\ order\ that\ has\ quantity\ reuested\ greater\ than\ Q_R}{Historical\ count\ of\ inductions\ with\ given\ work\ task}$$

Therefore, the probability that a given part is required in a given induction can be expressed:

$$P(P_O > Q_R | N_C) = P(P_O > Q_R) * P(N_C | P_O > Q_R) / P(N_C)$$

$$= P(P_O > Q_R) * 1 / P(N_C)$$

$$= P(P_O > Q_R) / P(N_C)$$

where $Q_R$ represents the quantity requested of a given part order. $Q_R$ may also represent an *estimate* of the quantity requested of a given part order (e.g., mean, median, mode, quantile), in which case $P(P_O > Q_R | N_C)$ is the probability that a given work task with a part order produces a need for more than a given *expected* quantity of parts.

Non-conformance forecasting system **200** can also calculate, given a part is ordered, the probability that the part order is for a given work task. The probability order can be expressed:

$$P(W_T | P_{Given}) = P(W_T) * P(P_{Given} | W_T) / P(P_{Given})$$

$$= P(W_T) * 1 / P(P_{Given})$$

$$= P(W_T) / P(P_{Given})$$

It should be noted that $P(P_{Given} | W_T) / P(P_{Given})$ is equal to 1 since the interest is in work tasks that resulted in the given part order.

The description of the different illustrative embodiments has been presented for purposes of illustration and description and is not intended to be exhaustive or limited to the embodiments in the form disclosed. The different illustrative examples describe components that perform actions or operations. In an illustrative embodiment, a component can be configured to perform the action or operation described. For example, the component can have a configuration or design for a structure that provides the component an ability to perform the action or operation that is described in the illustrative examples as being performed by the component. Further, to the extent that terms "includes", "including", "has", "contains", and variants thereof are used herein, such terms are intended to be inclusive in a manner similar to the term "comprises" as an open transition word without precluding any additional or other elements.

Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

Also provided are the following illustrative, non-exhaustive examples of the subject-matter encompassed herein, which relate to:

A computer-implemented method of predicting non-conformance of vehicle parts, the method comprising: using a number of processors to perform the operations of: collating historical work records related to a vehicle model, wherein the work record specifies a work task, non-conformances discovered during the work task, replacement parts required for the work task, when the work task occurred, and where the work task occurred; calculating, from the historical work records, probabilities of non-conformances according to types of work tasks, locations of the work tasks, and timing of the work tasks; determining replacement part requirements according to types of non-conformances; and sending requests for replacement parts for specified service locations according to scheduled work tasks for the vehicle model at the service locations and anticipated probabilities of non-conformances related to the work tasks.

The method described in the immediately preceding paragraph, further comprising displaying, in a user interface dashboard, a chart of probabilities of non-conformance discovery according to type of work task.

The method described in the first one of the two immediately preceding paragraphs, further comprising displaying, in a user interface dashboard, percentages of non-conformances requiring replacement parts.

The method described in the first one of the three immediately preceding paragraphs, further comprising displaying, in a user interface dashboard, probabilities of non-conformances requiring in replacement part orders according to type of work task.

The method described in the first one of the four immediately preceding paragraphs, further comprising displaying, in a user interface dashboard, frequency of replacement parts ordered to resolve non-conformances according to type of work task.

The method described in the first one of the five immediately preceding paragraphs, further comprising displaying, in a user interface dashboard, replacement parts and respective quantities to have on hand at a specified location according to the scheduled work tasks.

The method described in the first one of the six immediately preceding paragraphs, wherein the work tasks are performed during depots inductions.

A system for predicting non-conformance of vehicle parts, the system comprising: a storage device configured to store program instructions; and one or more processors operably connected to the storage device and configured to execute the program instructions to cause the system to: collate historical work records related to a vehicle model, wherein the work record specifies a work task, non-conformances discovered during the work task, replacement parts required for the work task, when the work task occurred, and where the work task occurred; calculate, from the historical work records, probabilities of non-conformances according to types of work tasks, locations of the work tasks, and timing of the work tasks; determine replacement part requirements according to types of non-conformances; and send requests for replacement parts for specified service locations according to scheduled work tasks for the vehicle model at the service locations and anticipated probabilities of non-conformances related to the work tasks.

The system described in the immediately preceding paragraph, wherein the processors further execute instructions to display, in a user interface dashboard, a chart of probabilities of non-conformance discovery according to type of work task.

The system described in the first one of the two immediately preceding paragraphs, wherein the processors further execute instructions to display, in a user interface dashboard, percentages of non-conformances requiring replacement parts.

The system described in the first one of the three immediately preceding paragraphs, wherein the processors further execute instructions to display, in a user interface dashboard, probabilities of non-conformances requiring in replacement part orders according to type of work task.

The system described in the first one of the four immediately preceding paragraphs, wherein the processors further execute instructions to display, in a user interface dashboard, frequency of replacement parts ordered to resolve non-conformances according to type of work task.

The system described in the first one of the five immediately preceding paragraphs, wherein the processors further execute instructions to display, in a user interface dashboard, replacement parts and respective quantities to have on hand at a specified location according to the scheduled work tasks.

The system described in the first one of the six immediately preceding paragraphs, wherein the work tasks are performed during depots inductions.

A computer program product for predicting non-conformance of vehicle part, the computer program product comprising: a computer-readable storage medium having program instructions embodied thereon to perform a method comprising: collating historical work records related to a vehicle model, wherein the work record specifies a work task, non-conformances discovered during the work task, replacement parts required for the work task, when the work task occurred, and where the work task occurred; calculating, from the historical work records, probabilities of non-conformances according to types of work tasks, locations of the work tasks, and timing of the work tasks; determining replacement part requirements according to types of non-conformances; and sending requests for replacement parts for specified service locations according to scheduled work tasks for the vehicle model at the service locations and anticipated probabilities of non-conformances related to the work tasks.

The computer program product described in the immediately preceding paragraph, further comprising instructions for displaying, in a user interface dashboard, a chart of probabilities of non-conformance discovery according to type of work task.

The computer program product described in the first one of the two immediately preceding paragraphs, further comprising instructions for displaying, in a user interface dashboard, percentages of non-conformances requiring replacement parts.

The computer program product described in the first one of the three immediately preceding paragraphs, further comprising instructions for displaying, in a user interface dashboard, probabilities of non-conformances requiring in replacement part orders according to type of work task.

The computer program product described in the first one of the four immediately preceding paragraphs, further comprising instructions for displaying, in a user interface dashboard, frequency of replacement parts ordered to resolve non-conformances according to type of work task.

The computer program product described in the first one of the five immediately preceding paragraphs, further comprising instructions for displaying, in a user interface dashboard, replacement parts and respective quantities to have on hand at a specified location according to the scheduled work tasks.

**Claims**

1. A computer-implemented method (500) of predicting non-conformance of vehicle parts, the method comprising:

using a number of processors (252) to perform the operations of:

collating (502) historical work records (202) related to a vehicle model, wherein the work record specifies a work task (206), non-conformances (208) discovered during the work task, replacement parts (210) required for the work task, when the work task occurred (214), and where the work task occurred (212);
calculating (504), from the historical work records, probabilities of non-conformances (220) according to types of work tasks, locations of the work tasks, and timing of the work tasks;
determining (506) replacement part requirements (222) according to types of non-conformances; and
sending (508) requests (240) for replacement parts for specified service locations according to scheduled work tasks for the vehicle model at the service locations and anticipated probabilities of non-conformances related to the work tasks.

2. The method of claim 1, further comprising displaying (602), in a user interface dashboard (242), a chart of probabilities of non-conformance discovery according to type of work task (230).

3. The method of claim 1, further comprising displaying (702), in a user interface dashboard, percentages of non-conformances requiring replacement parts (232).

4. The method of claim 1, further comprising displaying (802), in a user interface dashboard, probabilities of non-conformances requiring in replacement part orders according to type of work task (234).

5. The method of claim 1, further comprising displaying (902), in a user interface dashboard, frequency of replacement parts ordered to resolve non-conformances according to type of work task (236).

6. The method of claim 1, further comprising displaying (1002), in a user interface dashboard, replacement parts and respective quantities to have on hand at a specified location according to the scheduled work tasks (238).

7. The method of claim 1, wherein the work tasks are performed during depots inductions.

8. A system (200 for predicting non-conformance of vehicle parts, the system comprising:

a storage device (1116) configured to store program instructions; and
one or more processors (1104) operably connected to the storage device and configured to execute the program instructions to cause the system to:

collate (502) historical work records (202) related to a vehicle model, wherein the work record specifies a work task (206), non-conformances (208) discovered during the work task, replacement parts (210) required for the work task, when the work task occurred (214), and where the work task occurred (212);
calculate (504), from the historical work records, probabilities of non-conformances (220) according to types of work tasks, locations of the work tasks, and timing of the work tasks;
determine (506) replacement part requirements (222) according to types of non-conformances; and
send (508) requests (240) for replacement parts for specified service locations according to scheduled work tasks for the vehicle model at the service locations and anticipated probabilities of non-conformances related to the work tasks.

9. The system of claim 8, wherein the processors further execute instructions to display (602), in a user interface dashboard (242), a chart of probabilities of non-conformance discovery according to type of work task (230).

10. The system of claim 8, wherein the processors further execute instructions to display (702), in a user interface dashboard, percentages of non-conformances requiring replacement parts (232).

11. The system of claim 8, wherein the processors further execute instructions to display (802), in a user interface dashboard, probabilities of non-conformances requiring in replacement part orders according to type of work task (234).

12. The system of claim 8, wherein the processors further execute instructions to display (902), in a user interface dashboard, frequency of replacement parts ordered to resolve non-conformances according to type of work task (236).

**13.** The system of claim 8, wherein the processors further execute instructions to display (1002), in a user interface dashboard, replacement parts and respective quantities to have on hand at a specified location according to the scheduled work tasks (238).

**14.** The system of claim 8, wherein the work tasks are performed during depots inductions.

**15.** A computer program product (1122) for predicting non-conformance of vehicle part, the computer program product comprising: a computer-readable storage medium (1124) having program instructions embodied thereon to perform a method according to any of claims 1 to 7.

FIG. 1

FIG. 2

250

COMPUTER SYSTEM

202

NON-CONFORMANCE
FORECASTING SYSTEM    200    216

204    HISTORICAL
WORK RECORDS

HISTORICAL WORK RECORD

WORK TASK

206    208

NON-CONFORMANCES

REQUIRED
REPLACEMENT
PARTS

210    212

LOCATION OF
WORK TASK

TIMING OF
WORK TASK

214

WORK TASK
PREDICTIONS    218

WORK TASK PREDICTION

PROBABILITY OF
NON-
CONFORMANCES

REQUIRED
REPLACEMENT
PARTS

220    224    222    226

LOCATION    TIMING

228    USER INTERFACE DISPLAY    230

PROBABILITY OF NON-CONFORMANCE
ACCORDING TO WORK TASK

PERCENTAGE OF NON-CONFORMANCES
REQUIRING REPLACEMENT PARTS

232    234

PROBABILITIES OF NON-CONFORMANCES
REQUIRING REPLACEMENT PARTS
ACCORDING TO WORK TASK

FREQUENCY OF REPLACEMENT
PARTS ORDERED TO ADDRESS
NON-CONFORMANCES
ACCORDING TO WORK TASK

236    238

REPLACEMENT PARTS AND RESPECTIVE
QUANTITIES TO HAVE ON HAND AT
SPECIFIED LOCATIONS ACCORDING TO
SCHEDULED WORK TASKS

USER INTERFACE
DASHBOARD    242

REPLACEMENT
PART REQUESTS

240

PROCESSOR UNITS
252

PROGRAM CODE
254

FIG. 3
(PRIOR ART)

400

✈ DEPOT INDUCTION

INSPECTION #1

| NCM | NCM | NCM |
|---|---|---|

INSPECTION #2

| NCM | NCM | NCM |
|---|---|---|

○
○
○

INSPECTION N

FIG. 4

500

START

502 — COLLATE HISTORICAL WORK RECORDS RELATED TO A VEHICLE MODEL, WHEREIN EACH WORK RECORD SPECIFIES A WORK TASK, NONCONFORMANCES DISCOVERED DURING THE WORK TASK, REPLACEMENT PARTS REQUIRED FOR THE WORK TASK, WHEN THE WORK TASK OCCURRED, AND WHERE THE WORK TASK OCCURRED

504 — CALCULATE, FROM THE HISTORICAL WORK RECORDS, PROBABILITIES OF NONCONFORMANCES ACCORDING TO TYPES OF WORK TASKS, LOCATIONS OF WORK TASKS, AND TIMING OF WORK TASKS

506 — DETERMINE REPLACEMENT PART REQUIREMENTS ACCORDING TO TYPES OF NON-CONFORMANCES

508 — SEND REQUESTS FOR REPLACEMENT PARTS FOR SPECIFIED SERVICE LOCATIONS ACCORDING TO SCHEDULED WORK TASKS FOR THE VEHICLE MODEL AT THE SERVICE LOCATIONS AND ANTICIPATED PROBABILITIES OF NON-CONFORMANCES RELATED TO THE WORK TASKS

END

FIG. 5

600

```
        ┌─────────┐
        │  START  │
        └────┬────┘
             ▼
┌──────────────────────────────────┐
│      DISPLAY, IN A USER INTERFACE │
│ DASHBOARD, A CHART OF PROBABILITIES │
│  OF NON-CONFORMANCE DISCOVERY     │
│  ACCORDING TO TYPE OF WORK TASK   │
└────────────────┬─────────────────┘
             ▼
        ┌─────────┐
        │   END   │
        └─────────┘
```

602

FIG. 6

700

```
        ┌─────────┐
        │  START  │
        └────┬────┘
             ▼
┌──────────────────────────────────┐
│ DISPLAY, IN A USER INTERFACE DASHBOARD, │
│  PERCENTAGES OF NON-CONFORMANCES  │
│     REQUIRING REPLACEMENT PARTS   │
└────────────────┬─────────────────┘
             ▼
        ┌─────────┐
        │   END   │
        └─────────┘
```

702

FIG. 7

800

```
        ┌─────────┐
        │  START  │
        └────┬────┘
             ▼
┌──────────────────────────────────┐
│ DISPLAY, IN A USER INTERFACE DASHBOARD, │
│  PROBABILITIES OF NON-CONFORMANCES │
│ REQUIRING REPLACEMENT PART ORDERS │
│   ACCORDING TO TYPE OF WORK TASK  │
└────────────────┬─────────────────┘
             ▼
        ┌─────────┐
        │   END   │
        └─────────┘
```

802

FIG. 8

900

START

902 ~ DISPLAY, IN A USER INTERFACE DASHBOARD,
FREQUENCY OF REPLACEMENT PARTS
ORDERED TO ADDRESS NON-CONFORMANCES
ACCORDING TO TYPE OF WORK TASK

END

FIG. 9

1000

START

1002 ~ DISPLAY, IN A USER INTERFACE
DASHBOARD, REPLACEMENT PARTS AND
RESPECTIVE QUANTITIES TO HAVE ON
HAND AT A SPECIFIED LOCATION
ACCORDING TO SCHEDULED WORK TASK

END

FIG. 10

1100

DATA PROCESSING SYSTEM

1116

STORAGE DEVICES

1106 MEMORY

1108 PERSISTENT STORAGE

1104 PROCESSOR UNIT

1102

COMMUNICATIONS UNIT

INPUT/OUTPUT UNIT

DISPLAY

1110

1112

1114

1120 COMPUTER PROGRAM PRODUCT

COMPUTER READABLE MEDIA

PROGRAM CODE

1118

1122

COMPUTER READABLE STORAGE MEDIA

1124

1126

COMPUTER READABLE SIGNAL MEDIA

FIG. 11

1200

1202 — SPECIFICATION AND DESIGN

1204 — MATERIAL PROCUREMENT

1206 — COMPONENT AND SUBASSEMBLY MANUFACTURING

1208 — SYSTEM INTEGRATION

1210 — CERTIFICATION AND DELIVERY

1212 — IN SERVICE

1214 — MAINTENANCE AND SERVICE

FIG. 12

1300

AIRCRAFT

1302 — AIRFRAME          INTERIOR — 1306

SYSTEMS

PROPULSION SYSTEM          ELECTRICAL SYSTEM

1308    1312              1310    1314

HYDRAULIC SYSTEM          ENVIRONMENTAL SYSTEM

— 1304

FIG. 13

1400

PRODUCT MANAGEMENT SYSTEM

1402

1406  MANUFACTURING
SYSTEM

MANUFACTURING
EQUIPMENT

1408 — FABRICATION
EQUIPMENT

1410 — ASSEMBLY
EQUIPMENT

CONTROL
SYSTEM

1414

1416

HUMAN
OPERATORS

1404

MAINTENANCE
SYSTEM

MAINTENANCE
EQUIPMENT

1412

FIG. 14

1500

INDUCTION

1-n | WILL HAVE

WORK TASK | P(WT)

1-n | WILL HAVE

WORK ORDER

DOESN'T HAVE | DOES HAVE

1-n

$P(\overline{NC}|WT)$ | NON-CONFORMANCE

NON-CONFORMANCE | P(NC|WT)

DOESN'T HAVE | DOES HAVE

1-n

DISCREPANCY

DISCREPANCY

DOESN'T HAVE | DOES HAVE

1-n

$P(\overline{PO}|NC)$ | PART ORDER

PART ORDER | P(PO|NC)

1-n

FIG. 15

Europäisches Patentamt

European Patent Office

Office européen des brevets

## EUROPEAN SEARCH REPORT

Application Number

EP 23 18 6555

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/236075 A1 (SHI FONG [US]) 17 August 2017 (2017-08-17) * abstract * * paragraph [0009] – paragraph [0011] * * paragraph [0029] – paragraph [0035] * * paragraph [0042] * * claims 1-22 * ----- | 1-15 | INV. G06Q10/00 G06Q10/08 G06Q10/087 G06Q10/20 |
| A | EP 3 677 892 A1 (BOEING CO [US]) 8 July 2020 (2020-07-08) * the whole document * ----- | 1-15 | |

TECHNICAL FIELDS SEARCHED (IPC)

G06Q

The present search report has been drawn up for all claims

| Place of search | Date of completion of the search | Examiner |
|---|---|---|
| Munich | 9 November 2023 | Anastasov, Yuliyan |

## ANNEX TO THE EUROPEAN SEARCH REPORT
## ON EUROPEAN PATENT APPLICATION NO.

EP 23 18 6555

This annex lists the patent family members relating to the patent documents cited in the above-mentioned European search report.
The members are as contained in the European Patent Office EDP file on
The European Patent Office is in no way liable for these particulars which are merely given for the purpose of information.

09-11-2023

| Patent document cited in search report | | Publication date | Patent family member(s) | | Publication date |
|---|---|---|---|---|---|
| US 2017236075 | A1 | 17-08-2017 | CN | 107085744 A | 22-08-2017 |
| | | | EP | 3206177 A1 | 16-08-2017 |
| | | | JP | 6840529 B2 | 10-03-2021 |
| | | | JP | 2017199342 A | 02-11-2017 |
| | | | US | 2017236075 A1 | 17-08-2017 |
| EP 3677892 | A1 | 08-07-2020 | CN | 111404981 A | 10-07-2020 |
| | | | EP | 3677892 A1 | 08-07-2020 |
| | | | US | 2020213012 A1 | 02-07-2020 |

EPO FORM P0459

For more details about this annex : see Official Journal of the European Patent Office, No. 12/82